Europäisches Patentamt

European Patent Office

Office européen des brevets

(11) Publication number: **0 136 002**
**B1**

# EUROPEAN PATENT SPECIFICATION

(45) Date of publication of patent specification: **04.01.89**

(21) Application number: **84304979.2**

(22) Date of filing: **20.07.84**

(51) Int. Cl.⁴: **G 01 N 21/27**

(54) **Measuring apparatus provided with liquid dispenser.**

(30) Priority: **30.08.83 FI 833077**

(43) Date of publication of application:
**03.04.85 Bulletin 85/14**

(45) Publication of the grant of the patent:
**04.01.89 Bulletin 89/01**

(84) Designated Contracting States:
**AT BE CH DE FR GB IT LI LU NL SE**

(56) References cited:
**DE-A-2 347 173**
**DE-A-3 014 250**
**DE-A-3 234 563**
**US-E- 30 845**

(73) Proprietor: **LABSYSTEMS OY**
**Pulttitie 9**
**SF-00810 Helsinki 81 (FI)**

(72) Inventor: **Ekholm, Pertti**
**Sammatintie 6 L 130**
**SF-00550 Helsinki (FI)**
Inventor: **Kaukanen, Esko**
**Akselinpolku 7 D 20**
**SF-02230 Espoo 32 (FI)**
Inventor: **Suovaniemi, Osmo**
**Kulopolku 6**
**SF-00570 Helsinki (FI)**

(74) Representative: **Freed, Arthur Woolf et al**
**Reginald W. Barker & Co. 13 Charterhouse**
**Square**
**London EC1M 6BA (GB)**

Courier Press, Leamington Spa, England.

# Description

The present invention concerns a separate apparatus measuring the radiation characteristics of liquid samples, such as a photometer, a spectrophotometer, a fluorometer, a luminometer, a turbidometer, a nephelometer, a cell counter, or an isotope counter.

In prior art are known types of analysis apparatus, e.g. photometers, having a set of cuvettes for the samples and a movable measuring head for receiving radiation or for conveying radiation into the sample. Such apparatus also exists which furthermore has a liquid dispenser by which a sample of a reagent can be conveyed into the cuvettes. A means like this is required e.g. when the measurement has to be performed immediately upon adding reagent.

DE—A—3 234 563 discloses optical measuring apparatus having a liquid dispenser mounted for movement together with a movable measuring head.

DE—A—3 014 250 discloses apparatus for use in measuring radiation characteristics of liquid samples, comprising a set of cuvettes movable in a horizontal direction, a liquid dispenser, and measuring stations including a light source and a light detecter.

According to the present invention, there is provided apparatus for use in measuring radiation characteristics of liquid samples, comprising a set of cuvettes, a liquid dispenser, and a movable measuring head, characterised in that the tip of the liquid dispenser is fixed to the measuring head, in that the set of cuvettes is movable in a first horizontal direction, in that the measuring head includes a light source positioned below the set of cuvettes and a light detector positioned vertically above the light source and above the set of cuvettes, and in that the measuring head is movable in a second horizontal direction perpendicular to the first horizontal direction.

The apparatus of the invention has the advantage, to start with, that no separate movable member is required for managing the dispensing of liquids. Furthermore, it is possible with the apparatus to measure the sample with shorter delay than before immediately before and after adding reagent, whereby the range of applications of the apparatus is significantly expanded. The use of a movable set of cuvettes furthermore increases the flexibility in use of the apparatus.

One embodiment of the invention is more closely illustrated with the aid of the attached drawing.

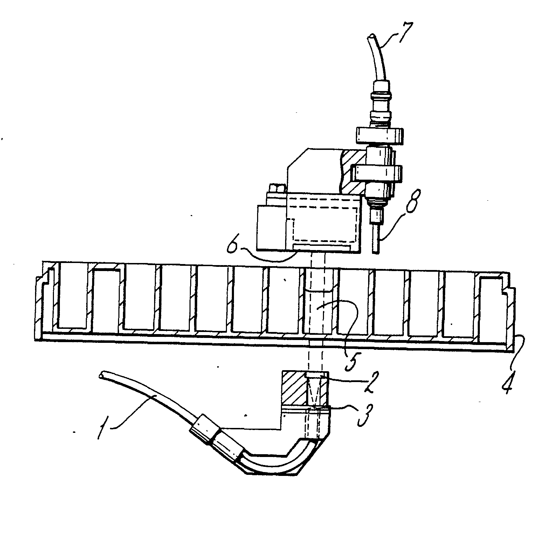

The light is introduced in the measuring head from a light source through a fibre bundle 1. With the aid of a collecting lens 2, the light beam emerging from the end 3 of the fibre bundle is adapted to pass through the sample 5 in the set of cuvettes 4, whereafter the light beam impinges on a photodetector 6. The light path has been indicated with interrupted lines in Fig. 2. The signal from the light detector is processed in an electric circuit and the calculations, if such are needed, are carried out e.g. with a computer. The liquid is introduced in the measuring head by a flexible tube 7 and it is dispensed into the cuvettes, or drawn from the cuvettes, through the tip 8. In the figure, the light detector and the tip of the liquid dispenser are not located at the same point, and the measuring head must therefore be slightly displaced between the dispensing and measuring steps having reference to one given cuvette. This need of displacement may be avoided e.g. by bending the tip of the liquid dispenser in under the light detector. The light source, the light detector and the tip of the liquid dispenser have been installed in the measuring fork in such a way that when the measuring fork moves they will be held in fixed positions relative to each other. The movement of the measuring fork is at right angles against the path of movement of the set of cuvettes so that any one of the cuvettes can be subjected to measurement by moving both through a given distance.

The apparatus may be used to measure absorption, so that the most advantageous method of measurement is the so-called vertical measuring mode. For this purpose, the light source is located below the set of cuvettes.

## Claim

1. Apparatus for use in measuring radiation characteristics of liquid samples (5), comprising a set of cuvettes (4), a liquid dispenser (7), and a movable measuring head, characterised in that the tip (8) of the liquid dispenser (7) is fixed to the measuring head, in that the set of cuvettes (4) is movable in a first horizontal direction, in that the measuring head includes a light source (2, 3) positioned below the set of cuvettes (4) and a light detector (6) positioned vertically above the light soure (2, 3) and above the set of cuvettes (4), and in that the measuring head is movable in a second horizontal direction perpendicular to the first horizontal direction.

## Patentanspruch

1. Apparat zur Verwendung beim Messen von Strahlungscharakteristika flüssiger Proben (5), welcher ein Set Küvetten (4), einen Flüssigkeitsabgeber (7) und einen bewegbaren Meßkopf umfaßt, dadurch gekennzeichnet, daß die Spitze (8) des Flüssigkeitsabgebers (7) am Meßkopf fixiert ist, daß das Set Küvetten (4) in einer ersten horizontalen Ebene bewegbar ist, daß der Meßkopf eine Lichtquelle (2, 3), die unter dem Set Küvetten (4) positioniert ist, und einen Lichtdetektor (6) aufweist, der vertikal über der Lichtquelle (2, 3) und über dem Set Küvetten (4) positioniert ist, und daß der Meßkopf in einer zweiten horizontalen Richtung normal zur ersten horizontalen Richtung bewegbar ist.

**Revendication**

1. Appareil à utiliser dans la mesure des caractéristiques de rayonnement d'échantillons liquides (5) comprenant un jeu de coupelles (4), un distributeur de liquide (7) et une tête de mesure mobile, caractérisé par le fait que le bec (8) du distributeur de liquide (7) est fixé à la tête de mesure, que le jeu des coupelles (4) est mobile dans une première direction horizontale, que la tête de mesure comprend une source lumineuse (2, 3) disposée au-dessous du jeu des coupelles (4) et un détecteur de lumière (6) disposé verticalement au-dessus de la source lumineuse (2, 3) et au-dessus du jeu des coupelles (4), et que la tête de mesure est mobile dans une seconde direction horizontale perpendiculaire à la première direction horizontale.